# EUROPEAN PATENT APPLICATION

(11) **EP 2 322 950 A1**
(43) Date of publication of application: **18.05.2011**
(21) Application number: 09770261.7
(22) Date of filing: 26.06.2009
(51) Int. Cl.: G01S 13/89, G01V 3/12, G06T 7/00

(54) **MILLIMETER WAVE IMAGE PICKUP DEVICE**

(30) Priority: 27.06.2008 JP 2008168863
(71) Applicant: Masprodenkoh Kabushikikaisha, Nisshin-shi, Aichi 470-0194 (JP); Chuo Electronics Co., Ltd., Hachioji-shi, Tokyo 192-0051 (JP); Tohoku University, Sendai-shi, Miyagi 980-8577 (JP)
(72) Inventor: UEMURA, Jun, Nisshin-shi Aichi 470-0194 (JP); TAKEDA, Masamune, Nisshin-shi Aichi 470-0194 (JP); TAKAHASHI Junichi, Nisshin-shi Aichi 470-0194 (JP); HASEGAWA, Tsuyoshi, Hachioji-shi Tokyo 192-0051 (JP); HIRAI, Haruyuki, Hachioji-shi Tokyo 192-0051 (JP); NIIKURA, Hirotaka, Hachioji-shi Tokyo 192-0051 (JP); MATSUZAKI, Tomohiko, Hachioji-shi Tokyo 192-0051 (JP); SATO, Hiroyasu, Sendai-shi Miyagi 980-8577 (JP); SAWAYA, Kunio, Sendai-shi Miyagi 980-8577 (JP); MIZUNO, Koji, Sendai-shi Miyagi 980-8577 (JP)
(74) Representative: Roth, Klaus
(86) International application number: PCT/JP2009/061755
(87) International publication number: WO 2009/157551

(57) **Abstract**

A millimeter wave imaging apparatus includes: an imaging device provided with a millimeter wave sensor that receives millimeter waves radiated from a subject; an image data generation device that generates image data of the subject based on an output from the millimeter wave sensor constituting the imaging device; a storage device that stores inspection target object data indicating, with respect to each object to be an inspection target object, a shape of the object and a size of the object relative to the subject; a detection device that compares the inspection target object data stored by the storage device and the image data generated by the image data generation device, thereby to detect an inspection target object hidden in the subject; and an output device that outputs results of detection by the detection device.

## Description

### TECHNICAL FIELD

The present invention relates to a millimeter wave imaging apparatus that receives millimeter waves radiated from a subject such as a human body thereby to image the subject.

### BACKGROUND ART

Conventionally, it has been proposed to receive millimeter waves radiated from a subject such as a human body thereby to image the subject and detect a metallic or non-metallic weapon or smuggled goods hidden in the subject from the captured image (see, for example, Patent Documents 1, 2 and others).

A millimeter wave imaging apparatus used in the above proposal usually includes: a millimeter wave sensor array including multiple millimeter wave sensors arranged on a plane, and a lens that focuses millimeter waves radiated from a subject such as a human body to form a millimeter wave image on a millimeter wave receiving surface of the millimeter wave sensor array. The millimeter wave imaging apparatus is configured to receive a signal level of a receiving signal from each of the millimeter wave sensors constituting the millimeter wave sensor array as one of pixel values constituting a subject image, thereby to image the subject.
Patent Document 1: Japanese Unexamined Patent Application Publication No. 2006-258496
Patent Document 2: Japanese Patent Publication No. 2788619

### DISCLOSURE OF THE INVENTION

### PROBLEMS TO BE SOLVED BY THE INVENTION

There has been the following problem: since a captured image (a millimeter wave image) obtained by the conventional millimeter wave imaging apparatus is less clear than a visible light image, an inspector's experience is required to find an inspection target object hidden in the subject from the captured image, and a person with little experience has difficulty in finding the inspection target object from the captured image.

The present invention, which has been made in view of the problem, has an objective to provide a millimeter wave imaging apparatus that receives millimeter waves radiated from a subject thereby to image the subject, wherein the apparatus is capable of detecting an inspection target object hidden in the subject from a captured image and giving a notification to an inspector.

### MEANS FOR SOLVING THE PROBLEMS

A millimeter wave imaging apparatus according to a first aspect of the invention made to accomplish the objective includes: an imaging device provided with a millimeter wave sensor that receives millimeter waves radiated from a subject; an image data generation device that generates image data of the subject based on an output from the millimeter wave sensor constituting the imaging device; a storage device that stores inspection target object data indicating, with respect to each object to be an inspection target object, a shape of the object and a size of the object relative to the subject; a detection device that compares the inspection target object data stored by the storage device and the image data generated by the image data generation device, thereby to detect an inspection target object hidden in the subject; and an output device that outputs results of detection by the detection device.

A millimeter wave imaging apparatus according to a second aspect of the invention is the millimeter wave imaging apparatus according to the first aspect, wherein the output device displays an image of the subject on a display device based on the image data generated by the image data generation device, and displays, when an inspection target object is detected by the detection device, a location of the inspection target object on the image of the subject displayed on the display device.

A millimeter wave imaging apparatus according to a third aspect of the invention is the millimeter wave imaging apparatus according to the first aspect or the second aspect, wherein the detection device detects, as the inspection target object hidden in the subject, one or a plurality of inspection target objects similar to an object specified by the inspection target object data, and the output device displays, when the inspection target object is detected by the detection device, a symbol mark indicating a shape of the inspection target object detected by the detection device in a display area different from a display area for the image of the subject on the display device.

A millimeter wave imaging apparatus according to a fourth aspect of the invention is the millimeter wave imaging apparatus according to any one of the first aspect to the third aspect, which further includes an inspection target object data registration device that obtains data indicating a shape of an object to be an inspection target object and a size of the object relative to the subject, in accordance with an externally inputted registration command of an inspection target object, and stores the data in the storage device as a piece of the inspection target object data.

### EFFECTS OF THE INVENTION

In the millimeter wave imaging apparatus in the first aspect of the invention, the storage device that stores inspection target object data indicating, with respect to each object to be an inspection target object, a shape of the object and a size of the object relative to the subject is provided. The detection device compares the inspection target object data stored by the storage device and the image data generated by the image data generation device, thereby to detect an inspection target object hidden in the subject, The output device outputs results of detection by the detection device.

According to the millimeter wave imaging apparatus in the first aspect of the invention, therefore, it is not only possible to capture an image of the subject using millimeter waves radiated from the subject, but also possible to automatically determine whether or not an inspection target object is hidden in the subject and notify a determination result to an inspector.

Accordingly, when the millimeter wave imaging apparatus in the first aspect of the invention is used as an imaging apparatus to image each passenger or baggage in an airport and the like thereby to detect illegal objects from a captured image, even an inspector inexperienced in detection of illegal objects can easily detect an illegal object hidden in the subject (passenger or baggage). Thus, an improved safety of airplanes and the like can be achieved.

In the millimeter wave imaging apparatus in the second aspect of the invention, the output device displays an image of the subject on a display device based on the image data generated by the image data generation device, and displays, when an inspection target object is detected by the detection device, a location of the inspection target object on the image of the subject displayed on the display device.

According to the millimeter wave imaging apparatus in the second aspect of the invention, therefore, it is possible for an inspector to easily detect the fact that an inspection target object is hidden in the subject and a location of the hidden inspection target object from the image of the subject displayed on the display device. Thus, an improved usability of the millimeter wave imaging apparatus when detecting an inspection target object hidden in the subject using the apparatus can be achieved.

In the millimeter wave imaging apparatus according to the third aspect of the invention, the detection device detects, as the inspection target object hidden in the subject, one or a plurality of inspection target objects similar to objects specified by the inspection target object data, and the output device displays, when the inspection target object is detected by the detection device, the symbol mark indicating the shape of the inspection target object detected by the detection device in the display area different from the display area for the image of the subject on the display device.

According to the millimeter wave imaging apparatus in the third aspect of the invention, therefore, it is possible to identify the inspection target object hidden in the subject by using the image of the subject and the symbol mark displayed on the display device and take optimum security measures depending on the type of the identified inspection target object.

Also, in a case where the subject approaches the millimeter wave imaging apparatus, the captured image becomes clearer as a distance between the millimeter wave imaging apparatus and the subject becomes shorter, and thereby the inspection target object hidden in the subject can be more easily identified from the captured image.

Therefore, if the millimeter wave imaging apparatus is arranged on a place through which a person as the subject walks for use to detect an inspection target object hidden by the person, it is possible to narrow down what the inspection target object is as the person approaches the apparatus. Thus, the user can take measures while predicting the inspection target object hidden in the subject on the basis of changes of symbol marks displayed on the display device.

Further, in the millimeter wave imaging apparatus according to the fourth aspect of the invention, the inspection target object data registration device is provided. According to the millimeter wave imaging apparatus in the fourth aspect of the invention, therefore, when there is an object to be newly registered as the inspection target object, it is possible by inputting a registration command of the inspection target object and data indicating the shape and the size of the object relative to the subject thereby to easily register the data as a piece of the inspection target object data. Thus, a further improved usability of the millimeter wave imaging apparatus can be achieved.

### BRIEF DESCRIPTION OF THE DRAWINGS

FIG. 1 is a block diagram showing a configuration of an entire millimeter wave imaging apparatus according to an embodiment.
FIG. 2 is an explanatory view showing a configuration of a millimeter wave sensor.
FIG. 3 is an explanatory view illustrating inspection target object data stored in a storage section.
FIG. 4 is a flowchart showing a subject inspection process executed by an image processor.
FIG. 5 is an explanatory view showing an example of a captured image and inspection target objects displayed on a display unit.
FIG. 6 is a flowchart showing an inspection target registration process executed by the image processor.

### DESCRIPTION OF REFERENCE NUMERALS

2...subject, 4...inspection target object, 10...millimeter wave imaging apparatus, 12...lens antenna, 14...millimeter wave sensor array, 16...input section, 20...image processor, 22...operation section, 24...storage section, 26...display controller, 28...display unit, 30...millimeter wave sensor, 32...receiving antenna, 34...LNA (Low Noise Amplifier), 36...BPF (Band Pass Filter), 38...detector circuit.

### BEST MODE FOR CARRYING OUT THE INVENTION

An embodiment of the present invention will hereinafter be described.

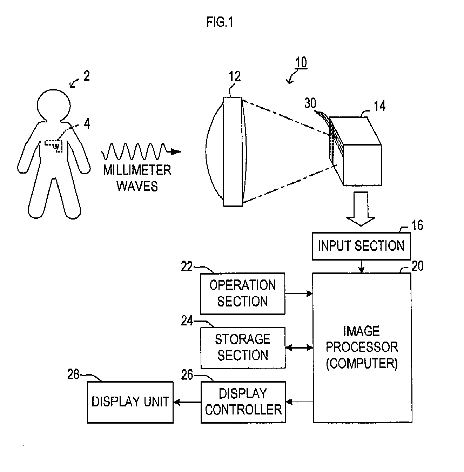

Fig. 1 is a block diagram showing a configuration of a millimeter wave imaging apparatus 10 to which the invention is applied. The millimeter wave imaging apparatus 10 of the present embodiment is used to check whether or not a passenger hides a dangerous object (an inspection target object 4) at an airport and the like. The apparatus includes a lens antenna 12 that receives millimeter waves radiated from a subject 2 in the apparatus and forms a subject image using the millimeter waves, a millimeter wave sensor array 14 that is arranged at an image forming position of the subject image by the lens antenna 12 to capture a subject image by receiving millimeter waves, and an image processor 20 that receives an output from the millimeter wave sensor array 14 through an input section 16 constituted by an A/D converter or the like and generates image data for the subject 2.

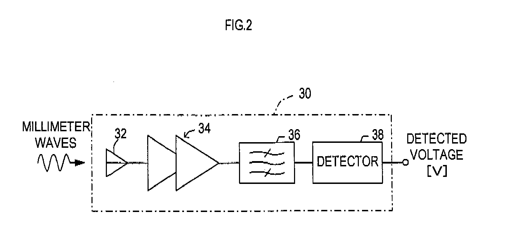

The millimeter wave sensor array 14 includes a plurality of millimeter wave sensors 30, each configured as shown in FIG. 2 as an imaging element for one pixel of a captured image, and is configured to be capable of capture a two-dimensional image for predetermined pixels in height and width by arranging the plurality of millimeter wave sensors 30 in a planar manner.

As shown in FIG. 2, the millimeter wave sensor 30 includes; a receiving antenna 32 for receiving millimeter waves, a low noise amplifier (LNA) 34 that amplifies received signals from the receiving antenna 32, a band pass filter (BPF) 36 that selectively allows passage of a received signal of a predetermined frequency band (for example, a 76-GHz band) suitable for detection of the inspection target object 4 among received signals amplified by the LNA 34, and a detector circuit 38 that detects the received signal which has passed the BPF 36 and detects a signal level thereof.

Accordingly, each of the millimeter wave sensors 30 constituting the millimeter wave sensor array 14 outputs a detected voltage in accordance with a signal level of a millimeter wave received at each receiving point. The image processor 20 sequentially receives detected voltages from the respective millimeter wave sensors 30 through the input section 16 to generate image data.

Also, to the image processor 20, which is constituted by a computer having an image processing function, an operation section 22 including a mouse and a keyboard, a storage section 24 including a hard disk and the like, and a display controller 26 for displaying the captured image of the subject 2 or the like on the display unit 28 are connected.

The image processor 20 not only displays the captured image of the subject 2 on the display unit 28, but also processes image data to determine whether or not the inspection target object 4 is hidden in the subject 2, and displays a location and a type of the inspection target object 4 on the display unit 28 if the inspection target object 4 is hidden.

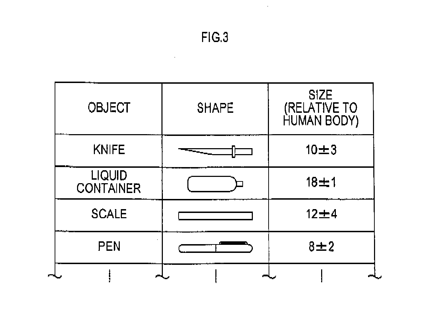

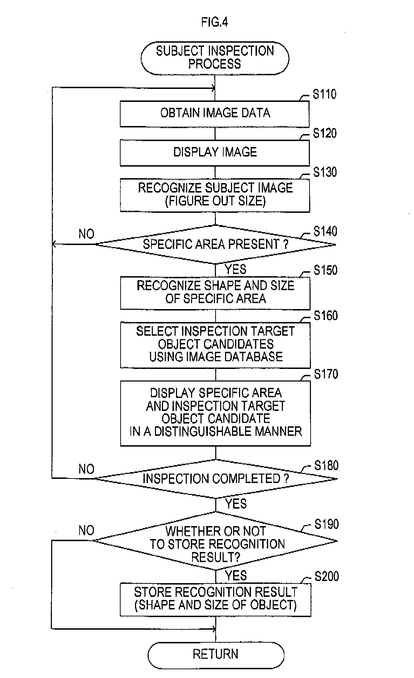

A subject inspection process executed by the image processor 20 in order to detect the inspection target object 4 in the above manner will hereinafter be described using the flowchart shown in FIG. 4. Before execution of the process, inspection target object data (see FIG. 3), including a type (name), a shape and a size of each of objects to be inspected (that is, the inspection target object 4), is previously stored in the storage section 24.

In the inspection target object data, a standard size of the subject (for example, an average height of passengers who are to be the subject 2) is used as a reference value (for example, 100) and a value indicating a ratio to the reference value is set as each value indicating a size of each object.

It is possible to additionally register another inspection target object 4 in the inspection target object data by operating the operation section 22 to input a registration command of additional inspection target object data to the image processor 20. This registration process will be described subsequent to the subject inspection process.

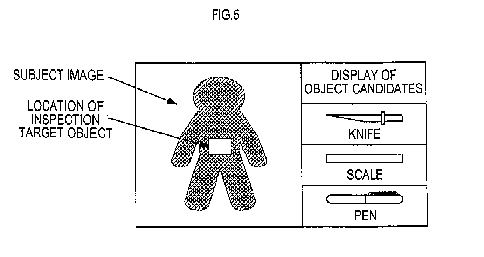

As shown in FIG. 4, when the subject inspection process is started, first in S110 (S means a step), detected voltages are sequentially received from the respective millimeter wave sensors 30 constituting the millimeter wave sensor array 14 through the input section 16 and image data is generated. In subsequent S120, a captured image of the subject 2 (a subject image) is displayed (see FIG. 5) on the display unit 28 through the display controller 26 based on the generated image data.

Next, in S130, the image data generated in S110 is processed to remove a background of the subject 2 so that a subject image in the captured image is recognized and the size thereof (specifically the height of the passenger as the subject 2) is figured out.

Then, in subsequent S140, it is determined whether or not there is an area (hereinafter, referred to as a "specific area") with a significantly different detected voltage compared with an average detected voltage of the entire subject 2 in the subject image recognized in S130. If there is no specific area, the present process proceeds to S110 again, and the same processings as above are executed.

On the other hand, if it is determined in S140 that there is a specific area, the present process proceeds to S150, in which a shape and a size of the specific area are recognized. In this case, the size of the specific area is recognized (quantified) using the size of the entire subject (for example, the height of the passenger) figured out in S180 as a reference, in a same manner as the value indicating the size of the object in the inspection target object data.

Subsequently, when the shape and the size of the specific area are recognized, the present process proceeds to S160, in which the recognition result is compared with the inspection target object data stored in the storage section 24, and thereby an inspection target object 4 which is similar to the specific area in shape and size is selected as an inspection target object candidate from among the inspection target objects 4 registered in the inspection target object data.

Selection of the inspection target object 4 in S160 is performed, for example, according to the following steps: A degree of similarity between the shape and the size of the inspection target object 4, and the shape and the size of the specific area is calculated. When the degree of similarity exceeds a threshold, it is determined that these are substantially identical, and the corresponding inspection target object 4 is selected.

In subsequent S170, as shown in FIG. 5, the specific area which has currently been recognized is displayed in a distinguishable manner as a location of the inspection target object 4 on the image of the subject 2 displayed on the display unit 28. Also, symbol marks indicating shapes of all (or the most similar "n", n: an integer of two or larger) of the inspection target objects 4 selected in S 160 as the inspection target object candidates are displayed in a display area (a right area of the display screen of the display unit 28 in this figure), which is different from a display area of the subject image, on the display unit 28.

If no inspection target object 4 which is similar to the specific area in shape and size has been selected in S160, no symbol mark of the inspection target object 4 is displayed, but only the location of the specific area is displayed in S170.

In subsequent S180, it is determined whether or not inspection of the subject has been completed based on a command from the operation section 22, an off-operation of a not-shown power switch, etc. When inspection of the subject has not been completed, the present process proceeds to S110 again, while when inspection of the subject has been completed, it is determined in S190 whether or not to store recognition result (shape/size) of the specific area recognized in the present subject inspection process as a registration candidate in the inspection target object data.

When it is determined in S190 to store the recognition result of the specific area, the recognition result (the shape and size of the object) of the specific area is stored in a registration candidate storage area of the storage section 24 in S200, and then the present subject inspection process is terminated. On the contrary, when it is determined in S190 not to store the recognition result of the specific area, the present subject inspection process is simply terminated.

The determination in S190 is executed according to the following steps: A selection menu to allow an inspector to select whether to store or delete the recognition result is displayed on the display unit 28. Then, input of a storage command or a deletion command of the recognition result by a user through the operation section 22 is waited for.

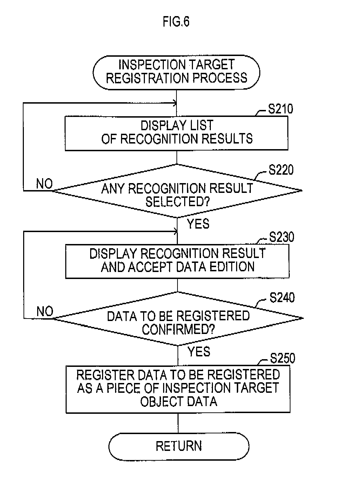

Next, FIG. 6 is a flowchart showing an inspection target registration process executed by the image processor 20 when a registration command of an inspection target object data is inputted through the operation section 22.
As shown in FIG. 6, when the inspection target registration process is started, recognition results (shapes and sizes of objects) of specific areas stored in the registration candidate storage area of the storage section 24 are read, and a list of the recognition results is displayed on the display unit 28, in S210.

In subsequent S220, selection of a recognition result is waited for by determining whether or not any recognition result has been selected from the list of the recognition results of the specific areas displayed on the display unit 28 through the operation section 22. When a recognition result has been selected, the present process proceeds to S230, in which a screen for registering the selected recognition result in the inspection target data is displayed on the display unit 28, and editing of data to be registered is accepted.

As clear from FIG. 3, the data to be registered of the inspection target object 4 includes name, shape and size of each object. Among these, data for shape and size is already present as the recognition result of the specific area. Accordingly, in S230, a name of an object is newly accepted, and modification of part of each data, such as size range, regarding shape and size is accepted.

Next, in S240, it is determined whether or not a confirmation command has been inputted for the data to be registered, edition of which has been accepted in S230. When a confirmation command has not been inputted, the present process proceeds to S230 again. When a confirmation command has been inputted, the present process proceeds to S250, in which the data to be registered after editing in S230 is stored in the storage section 24 as a piece of the inspection target object data, and the present process is temporarily terminated.

In the millimeter wave imaging apparatus 10, as described above, millimeter waves radiated from the subject 2 are collected by the lens antenna 12, and received by the millimeter sensor array 14 to thereby capture a two-dimensional image of the subject 2. Then, the captured image is received by the image processor 20 as image data and displayed on the display unit 28.

Also, the image processor 20 processes the captured image to detect a specific area with a significantly different detected voltage compared with other areas in the captured subject 2, and extracts an inspection target object (candidate) 4 which is similar to the specific area in shape and size relative to the subject 2 from the inspection target object data previously stored in the storage section 24. Then, a symbol mark of the extracted inspection target object (candidate) 4 and a location of the inspection target object 4 are displayed on the display unit 28.

Therefore, according to the millimeter wave imaging apparatus 10 of the present embodiment, when the subject 2 hides an inspection target object 4, it is possible to automatically detect the fact and display the symbol mark of the inspection target object 4 on the display screen of the captured image. The inspector can easily find the inspection target object 4 hidden by the subject 2 from the displayed image.

Also, in the millimeter wave imaging apparatus 10 of the present embodiment, when a plurality of inspection target objects which are similar to the specific area on the captured image in shape and size are selected as the inspection target object 4 hidden in the subject 2, symbol marks of all (or the most similar "n") of the selected inspection target objects 4 are displayed.

Accordingly, the inspector can identify the inspection target object 4 hidden in the subject 2 based on the image of the subject 2 and the symbol marks of the inspection target objects 4 displayed on the display unit 28 and can take optimum security measures depending on the type of the identified inspection target object 4.

Also, when the millimeter wave imaging apparatus 10 is arranged on a pathway through which a passenger as the subject 2 moves, as the passenger approaches the millimeter wave imaging apparatus 10, the captured image becomes clearer and the inspection target object 4 can be identified more easily from the captured image. The inspector, therefore, can take measures while predicting the inspection target object 4 hidden in the subject 2 on the basis of changes of symbol marks displayed on the display unit 28. Thus, an improved usability of the millimeter wave imaging apparatus 10 can be achieved.

Further, according to the millimeter wave imaging apparatus 10 of the present embodiment, if there is a specific area to be newly registered as an inspection target object 4 among shapes and sizes detected as specific areas in the subject image in the subject inspection process, it is possible to easily register a new inspection target object 4 by inputting a registration command and executing an inspection target registration process. Thus, a further improved usability of the millimeter wave imaging apparatus 10 can be achieved.

In the present embodiment, the millimeter wave sensor array 14 corresponds to an imaging device of the invention and the storage section 24 corresponds to a storage device of the invention. Also, in the present embodiment, the processing in S110 corresponds to an image data generation device of the invention, the processings in S130-S160 correspond to a detection device of the invention, and the processings in S120 and S170 correspond to an output device of the invention in the subject inspection process executed by the image processor 20. Further, in the present embodiment, the inspection target registration process corresponds to an inspection target object data registration device of the invention.

Although one embodiment of the present invention has been described above, the invention should not be limited to the above embodiment, but can be practiced in various manners without departing from the scope of the invention.
For example, it is described in the above embodiment that the millimeter wave imaging apparatus 10 is for checking whether or not a passenger hides a dangerous object in an airport or the like, and that the subject 2 is a passenger. However, the millimeter wave imaging apparatus of the present invention may be used for imaging a subject other than a human body, such as baggage, package, etc., and determining from the captured image whether or not an inspection target object 4 hidden in the baggage or package is present.

In the above embodiment, the imaging device is described as the millimeter wave sensor array 14 that images a two-dimensional image using the plurality of millimeter wave sensors 30 arranged on a plane. As the imaging device, however, such a configuration may be employed that millimeter wave images are sequentially inputted into one or an array of millimeter wave sensors through a millimeter wave scanning device, such as a polygon mirror.

## Claims

1. A millimeter wave imaging apparatus comprising:
an imaging device including a millimeter wave sensor that receives millimeter waves radiated from a subject;
an image data generation device that generates image data of the subject based on an output from the millimeter wave sensor constituting the imaging device;
a storage device that stores inspection target object data indicating, with respect to each object to be an inspection target object, a shape of the object and a size of the object relative to the subject;
a detection device that compares the inspection target object data stored by the storage device and the image data generated by the image data generation device, thereby to detect an inspection target object hidden in the subject; and
an output device that outputs results of detection by the detection device.

2. The millimeter wave imaging apparatus according to claim 1, wherein the output device displays an image of the subject on a display device based on the image data generated by the image data generation device, and displays, when an inspection target object is detected by the detection device, a location of the inspection target object on the image of the subject displayed on the display device.

3. The millimeter wave imaging apparatus according to claim 1 or claim 2, wherein
the detection device detects, as the inspection target object hidden in the subject, one or a plurality of inspection target objects similar to an object specified by the inspection target object data, and
the output device displays, when the inspection target object is detected by the detection device, a symbol mark indicating a shape of the inspection target object detected by the detection device, in a display area different from a display area for the image of the subject on the display device.

4. The millimeter wave imaging apparatus according to any one of claims 1 to 3, further comprising:
an inspection target object data registration device that obtains data indicating a shape of an object to be an inspection target object and a size of the object relative to the subject, in accordance with an externally inputted registration command of an inspection target object, and stores the data in the storage device as a piece of the inspection target object data.
